# FASCICULE DE BREVET EUROPEEN

(11) **EP 3 546 359 B1**
(45) Date de publication et mention de la délivrance du brevet: **13.05.2020**
(21) Numéro de dépôt: 19159028.0
(22) Date de dépôt: 25.02.2019
(51) Int. Cl.: B64D 11/06

(54) **AERONEF PRESENTANT UN MODULE DE LOGEMENT DE PASSAGER**
LUFTFAHRZEUG MIT EINEM PASSAGIERUNTERBRINGUNGSMODUL
AIRCRAFT COMPRISING A PASSENGER ACCOMODATION MODUL

(30) Priorité: 27.03.2018 FR 1852651
(43) Date de publication de la demande: 02.10.2019
(73) Titulaire: Airbus Interiors Services, 31000 Toulouse (FR)
(72) Inventeur: CHANTAL, Béranger, 31530 BRETX (FR); BAVEUX, Olivier, 13500 MARTIGUES-CARRO (FR); FERRERE, Nicolas, 82200 MOISSAC (FR); CHAFIQ, Nadra, 31100 TOULOUSE (FR)
(74) Mandataire: Gicquel, Olivier Yves Gérard

(56) Documents cités:
- GB-A- 2 454 751
- US-A- 6 056 239
- US-A1- 2005 012 363

## Description

La présente invention concerne un aéronef comportant au moins un module d'aménagement intérieur particulier qui présente un confort amélioré.

Dans certains aéronefs, l'aménagement intérieur permet d'assurer un meilleur confort des passagers en prévoyant un siège fixé au plancher de l'aéronef et qui peut se transformer en un lit afin de recevoir le passager.

On connait par les documents US2005/012363 et US6056239, qui décrivent chacun les caractéristiques mentionnées dans le préambule de la revendication 1, des modules d'aménagement intérieur comportant un caisson rigide sous forme d'un parallélépipède rectangle avec des grandes parois verticales et des petites parois verticales et dont une des grandes parois verticales est ouverte, un matelas qui recouvre un fond horizontal du caisson rigide et un dossier de siège disposé au-dessus du matelas contre une des petites parois verticales du caisson rigide. Bien que des tels aménagements intérieurs donnent entière satisfaction, il existe un besoin de trouver un aménagement intérieur qui permet une meilleure isolation du passager par rapport à ses voisins, tout en permettant au personnel de bord de voir si le passager est bien attaché contre le dossier de siège.

La présente invention vis à répondre en tout ou partie à ce besoin.

A cet effet, est proposé un aéronef comportant une cabine tel que revendiqué dans la revendication 1.

Un tel aéronef propose donc un module d'aménagement intérieur qui permet à chaque passager de dormir sur un vrai lit, d'avoir une position assise certifiée pour le décollage et l'atterrissage et d'être isolé de ses voisins.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue de dessus de l'aménagement de l'aéronef selon l'invention, et
la Fig. 3 et la Fig. 4 sont des vues en perspective d'un module d'aménagement intérieur selon l'invention.

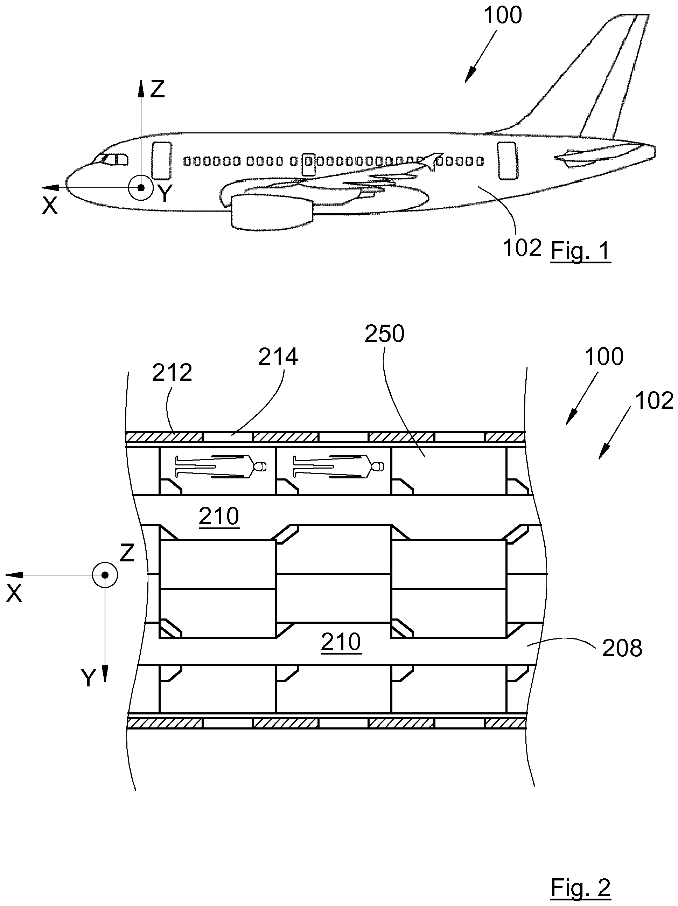

Dans la description qui suit, les termes relatifs à une position sont pris en référence à un aéronef en position normale d'utilisation, c'est-à-dire comme il est représenté sur la Fig. 1 avec son sens d'avancement normal (X) orienté vers la gauche. Le sens d'avancement normal est parallèle à l'axe longitudinal de l'aéronef 100.

La Fig. 1 montre un aéronef 100 qui comporte une cabine 102.

La Fig. 2 montre l'intérieur de la cabine 102. A l'intérieur de la cabine 102 est installé un plancher 208 sur lequel sont fixés des modules d'aménagement intérieur 250 où chacun est prévu pour recevoir un passager.

Dans le mode de réalisation de l'invention présenté sur la Fig. 2, il y a une colonne bâbord de modules 250 qui est à bâbord et qui comprend plusieurs modules 250 les uns à la suite des autres le long de l'axe longitudinal X, une colonne tribord de modules 250 qui est à tribord et qui comprend plusieurs modules 250 les uns à la suite des autres le long de l'axe longitudinal X. Entre ces deux colonnes est disposée une colonne centrale de modules 250 comportant plusieurs paires de modules 250 les unes à la suite des autres le long de l'axe longitudinal X où chaque paire de modules 250 comporte deux modules 250 l'un à côté de l'autre selon la direction transversale Y de l'aéronef 100.

Entre une colonne latérale et la colonne centrale est prévu un couloir 210.

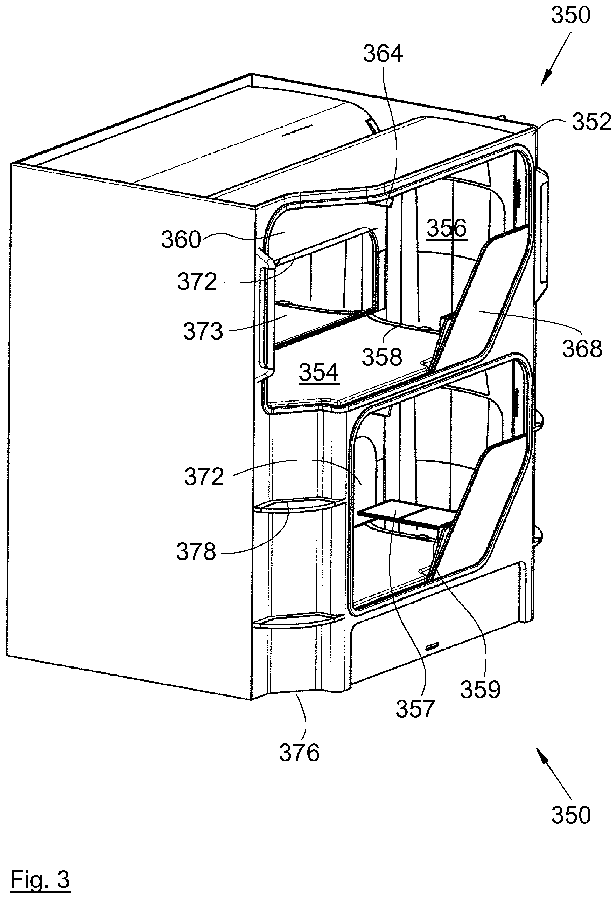

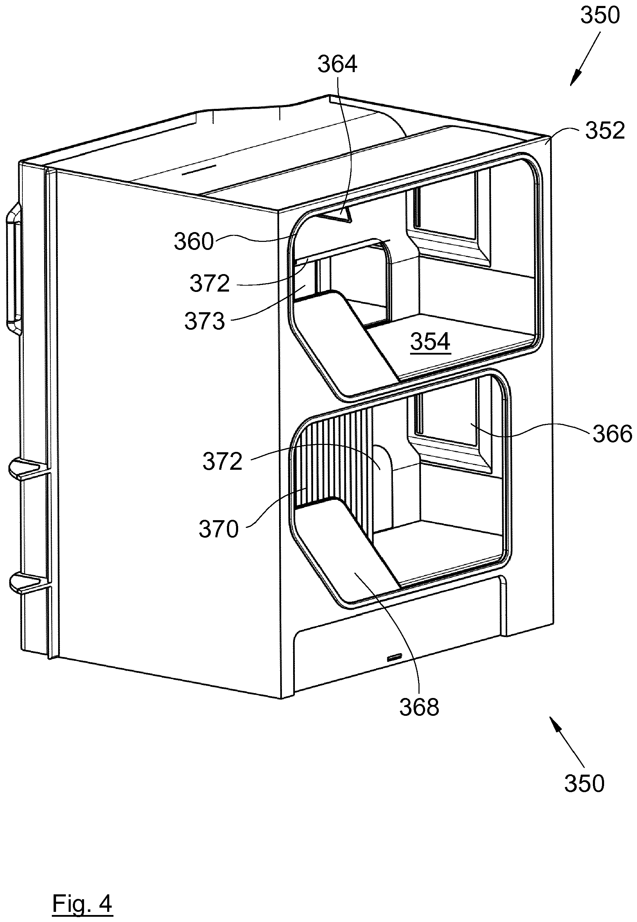

La Fig. 3 et la Fig. 4 montrent un empilement de deux modules 350 selon un mode de réalisation de l'invention et qui est vu selon deux directions différentes. Lorsqu'il y a un seul module 350, celui-ci est fixé directement au plancher 208. Dans le cas d'un empilement de deux modules 350, le module inférieur 350 est fixé directement au plancher 208 et le module supérieur 350 est fixé sur le module inférieur 350.

Chaque module 250, 350 comporte un caisson rigide 352 sous forme d'un parallélépipède rectangle qui présente des grandes parois verticales et des petites parois verticales et dont une des grandes parois verticales est ouverte afin de permettre le passage du passager qui souhaite entrer dans le module 250, 350. La grande paroi qui est ouverte est la paroi qui donne sur le couloir 210 et qui est parallèle à l'axe longitudinal X.

Chaque module 350 comporte un matelas 354 qui recouvre le fond horizontal du caisson rigide 352, afin de réaliser un lit pour le passager.

Chaque module 350 comporte également un dossier de siège 356 qui est disposé au-dessus du matelas 354 contre une des petites parois verticales du caisson rigide 352, à savoir la tête du matelas 354, et qui permet au passager de s'assoir sur le matelas 354 et de s'adosser au dossier de siège 356, en particulier lors du décollage et de l'atterrissage de l'aéronef 100.

Chaque module 350 comporte également une ceinture de sécurité 358 qui est disposée au niveau du dossier de siège 356 et qui permet au passager de s'attacher lorsqu'il est assis sur le matelas 354 et adossé contre le dossier de siège 356 durant le vol.

Un tel aéronef 100 propose donc un module d'aménagement intérieur 250, 350 qui permet à chaque passager de dormir sur un vrai lit, d'avoir une position assise certifiée pour le décollage et l'atterrissage et d'être mieux isolé de ses voisins.

Les points d'ancrage de la ceinture 358 peuvent être implantés sur le fond horizontal sous le matelas 354 ou sur la petite paroi verticale où est disposé le dossier de siège 356.

Le module d'aménagement intérieur 350 comporte une table 357 qui est montée mobile entre une position escamotée et une position d'utilisation. En position escamotée, la table est rangée de manière à ne pas constituer un obstacle pour un passager assis, et en position d'utilisation, la table 357 est disposée horizontalement devant le passager assis.

Dans le mode de réalisation de l'invention présenté ici, la table 357 est pliable et montée sur des charnières sur un support 359 disposé du côté de la grande paroi verticale ouverte.

Le module 350 peut également être équipé d'un écran 364 qui dans le mode de réalisation de l'invention présenté ici est fixé à la paroi horizontale de toit du caisson rigide 352. Ici, seul un coin de l'écran 364 est visible.

Le caisson rigide 352 peut également présenter un logement 366 pour y loger des bagages.

Afin d'assurer un minimum de confidentialité pour un passager assis sur le matelas 354 contre le dossier de siège 356, le caisson rigide 352 comporte une paroi de confidentialité 368 qui s'étend en travers de l'ouverture de la grande paroi verticale ouverte. La paroi de confidentialité 368 s'étend dans le coin inférieur de l'ouverture du côté du dossier de siège 356, mais ne recouvre pas toute l'ouverture.

Afin que le personnel de bord puisse voir si le passager est bien attaché contre le dossier de siège 356, la paroi de confidentialité 368 est transparente.

Afin d'assurer au mieux l'isolement du passager, le caisson rigide 352 comporte un rideau 370 qui est mobile entre une position rentrée dans laquelle il n'obture ni l'ouverture, ni la paroi de confidentialité 368 lorsqu'elle est présente, et une position sortie dans laquelle il obture l'ouverture et la paroi de confidentialité 368 lorsqu'elle est présente. Bien sûr, le rideau 370 peut prendre toutes les positions intermédiaires entre la position rentrée et la position sortie.

Dans le mode de réalisation de l'invention présenté ici, le rideau 370 prend la forme d'un rideau à lattes qui se déplace horizontalement depuis la tête jusqu'aux pieds du passager.

Dans la position rentrée, le rideau 370 peut être enroulé autour d'un tambour ou glissé dans une paroi creuse du caisson rigide 352.

Bien sûr, l'entraînement du rideau 370 peut être manuel ou motorisé.

Dans le cas de la colonne centrale qui correspond au cas des Figs. 3 et 4, les modules 250, 350 d'une paire sont accolés l'un contre l'autre par l'intermédiaire d'une paroi verticale de fond 360 qui est commune aux deux modules 250, 350 de la paire et qui est opposée et parallèle à la grande paroi ouverte. Afin de permettre une communication entre les deux modules 250, 350 de la paire, la paroi verticale de fond 360 est équipée d'un volet 372 qui est monté en travers d'une fenêtre 373 qui traverse la paroi verticale de fond 360. Le volet 372 est mobile entre une position ouverte et une position fermée. En position fermée, le volet 372 obture la fenêtre 373 et les deux modules 250, 350 sont isolés l'un de l'autre, et en position ouverte, la communication entre les passagers des deux modules 250, 350 de la paire est possible à travers la fenêtre 373.

Le volet 372 est par exemple escamotable à l'intérieur de la paroi verticale de fond 360.

Pour les colonnes bâbord et tribord, les modules 250, 350 sont disposés de manière à présenter leurs parois verticales de fond 360 qui sont opposées et parallèles à la grande paroi ouverte contre la paroi 212 de la cabine 102 dans laquelle sont disposés des hublots 214.

Afin de permettre au passager de regarder par le hublot 214 et à la lumière extérieure de pénétrer dans le module 250, 350, la paroi verticale de fond 360 est transparente.

Pour occulter le hublot 214, la paroi verticale de fond 360 est équipée d'un système d'occultation comme par exemple un rideau.

Dans le cas où deux modules 350 sont empilés, le caisson rigide 352 du module inférieur 350 présente un enfoncement 376 dans lequel est aménagée une échelle 378 permettant au passager du module supérieur 350 de monter dans son module 350.

Ici, l'enfoncement 376 se trouve au niveau des pieds du passager lorsqu'il est allongé.

## Revendications

1. Aéronef (100) comportant une cabine (102) et, à l'intérieur de la cabine (102), au moins un couloir (210) et un module d'aménagement intérieur (250, 350) qui comporte :
- un caisson rigide (352) sous forme d'un parallélépipède rectangle qui présente des grandes parois verticales et des petites parois verticales et dont une des grandes parois verticales donnant sur un couloir (210) est ouverte,
- un matelas (354) qui recouvre un fond horizontal du caisson rigide (352),
- un dossier de siège (356) disposé au-dessus du matelas (354) contre une des petites parois verticales du caisson rigide (352), et
- une ceinture de sécurité (358) disposée au niveau du dossier de siège (356) pour permettre à un passager de s'attacher lorsqu'il est assis sur le matelas (354) et adossé contre le dossier de siège (356), le caisson rigide (352) comportant une paroi de confidentialité (368) qui s'étend en travers de l'ouverture de la grande paroi verticale ouverte et dans le coin inférieur de l'ouverture du côté du dossier de siège (356), **caractérisé en ce que** la paroi de confidentialité (368) est transparente.

2. Aéronef (100) selon la revendication 1, **caractérisé en ce que** les points d'ancrage de la ceinture (358) sont implantés sur le fond horizontal sous le matelas (354).

3. Aéronef (100) selon la revendication 1, **caractérisé en ce que** les points d'ancrage de la ceinture (358) sont implantés sur la petite paroi verticale où est disposé le dossier de siège (356).

4. Aéronef (100) selon l'une des revendications 1 à 3, **caractérisé en ce que** le caisson rigide (352) présente une table (357) escamotable.

5. Aéronef (100) selon l'une des revendications 1 à 4, **caractérisé en ce qu'**il comporte deux modules (250, 350) accolés l'un contre l'autre par l'intermédiaire d'une paroi verticale de fond (360) commune et qui est opposée et parallèle à la grande paroi ouverte, **en ce que** la paroi verticale de fond (360) est percée d'une fenêtre (373), et comporte un volet (372) mobile entre une position ouverte dans laquelle il n'obture pas la fenêtre (373) et une position fermée dans laquelle il obture la fenêtre (373).

6. Aéronef (100) selon l'une des revendications 1 à 5, **caractérisé en ce que** la cabine (102) présente une paroi (212) équipée de hublots (214), **en ce que** le module (250, 350) présente sa paroi verticale de fond (360), qui est opposée et parallèle à la grande paroi ouverte, contre la paroi (212) de la cabine (102) équipée de hublots, et **en ce que** la paroi verticale de fond (360) est transparente.

7. Aéronef (100) selon la revendication 6, **caractérisé en ce que** la paroi verticale de fond (360) est équipée d'un système d'occultation.

8. Aéronef (100) selon l'une des revendications 1 à 7, **caractérisé en ce que** le caisson rigide (352) comporte un rideau (370) qui est mobile entre une position rentrée dans laquelle il n'obture ni l'ouverture, ni la paroi de confidentialité (368), et une position sortie dans laquelle il obture l'ouverture et la paroi de confidentialité (368).

9. Aéronef (100) selon l'une des revendications 1 à 8, **caractérisé en ce qu'**il comporte un module inférieur (350) et un module supérieur (350) empilé sur le module inférieur (350), et **en ce que** le caisson rigide (352) du module inférieur (350) présente un enfoncement (376) dans lequel est aménagée une échelle (378).

## Patentansprüche

1. Luftfahrzeug (100), das eine Kabine (102) und im Inneren der Kabine (102) mindestens einen Gang (210) und ein Innenausstattungsmodul (250, 350) aufweist, das aufweist:
- einen starren Kasten (352) in Form eines rechtwinkligen Parallelepipeds, der große senkrechte Seiten und kleine senkrechte Seiten aufweist, und von dem eine der großen senkrechten Seiten, die zu einem Gang (210) gerichtet ist, offen ist,
- eine Matratze (354), die einen waagrechten Boden des starren Kastens (352) bedeckt,
- eine Sitzrückenlehne (356), die über der Matratze (354) gegen eine der kleinen senkrechten Seiten des starren Kastens (352) angeordnet ist, und
- einen Sicherheitsgurt (358), der im Bereich der Sitzrückenlehne (356) angeordnet ist, um es einem Passagier zu erlauben, sich anzuschnallen, wenn er auf der Matratze (354) sitzt und sich gegen die Sitzrückenlehne (356) anlehnt, wobei der starre Kasten (352) eine Privatsphärenschutzwand (368) aufweist, die sich über die Öffnung der offenen großen senkrechten Wand und in der unteren Ecke der Öffnung auf der Seite der Sitzrückenlehne (356) erstreckt,
**dadurch gekennzeichnet, dass** die Privatsphärenschutzwand (368) transparent ist.

2. Luftfahrzeug (100) nach Anspruch 1, **dadurch gekennzeichnet, dass** die Verankerungspunkte des Gurts (358) auf dem waagrechten Boden unter der Matratze (354) installiert sind.

3. Luftfahrzeug (100) nach Anspruch 1, **dadurch gekennzeichnet, dass** die Verankerungspunkte des Gurts (358) auf der kleinen senkrechten Wand installiert sind, wo die Sitzrückenlehne (356) angeordnet ist.

4. Luftfahrzeug (100) nach einem der Ansprüche 1 bis 3, **dadurch gekennzeichnet, dass** der starre Kasten (352) einen schwenkbaren Tisch (357) aufweist.

5. Luftfahrzeug (100) nach einem der Ansprüche 1 bis 4, **dadurch gekennzeichnet, dass** es zwei Module (250, 350) aufweist, die mittels einer gemeinsamen senkrechten Rückwand (360) miteinander verbunden sind, die der offenen großen Wand gegenüber und zu ihr parallel liegt, dass die senkrechte Rückwand (360) durch ein Fenster (373) durchbrochen ist und einen Fensterladen (372) aufweist, der zwischen einer offenen Stellung, in der er das Fenster (373) nicht verschließt und einer geschlossenen Stellung beweglich ist, in der er das Fenster (373) verschließt.

6. Luftfahrzeug (100) nach einem der Ansprüche 1 bis 5, **dadurch gekennzeichnet, dass** die Kabine (102) eine mit Seitenfenstern (214) versehene Wand (212) aufweist, dass das Modul (250, 350) seine senkrechte Rückwand (360), die der offenen großen Wand gegenüberliegt und parallel zu ihr ist, gegen die mit Seitenfenstern versehene Wand (212) der Kabine (102) präsentiert, und dass die senkrechte Rückwand (360) transparent ist.

7. Luftfahrzeug (100) nach Anspruch 6, **dadurch gekennzeichnet, dass** die die senkrechte Rückwand (360) mit einem Verdunkelungssystem ausgestattet ist.

8. Luftfahrzeug (100) nach einem der Ansprüche 1 bis 7, **dadurch gekennzeichnet, dass** der starre Kasten (352) einen Vorhang (370) aufweist, der zwischen einer zurückgezogenen Stellung, in der er weder die Öffnung noch die Privatsphärenschutzwand (368) verdeckt, und einer ausgezogenen Stellung beweglich ist, in der er die Öffnung und die Privatsphärenschutzwand (368) verdeckt.

9. Luftfahrzeug (100) nach einem der Ansprüche 1 bis 8, **dadurch gekennzeichnet, dass** es ein unteres Modul (350) und ein oberes Modul (350) aufweist, das auf das untere Modul (350) gestapelt ist, und dass der starre Kasten (352) des unteren Moduls (350) eine Vertiefung (376) aufweist, in der eine Leiter (378) angeordnet ist.

## Claims

1. Aircraft (100) comprising a cabin (102) and, inside the cabin (102), at least one aisle (210) and an interior fitting module (250, 350) which comprises:
- a rigid casing (352) in the form of a right parallelepiped which has large vertical walls and small vertical walls and of which one of the large vertical walls giving onto an aisle (210) is open,
- a mattress (354) which covers a horizontal base of the rigid casing (352),
- a seatback (356) arranged above the mattress (354) against one of the small vertical walls of the rigid casing (352), and
- a safety belt (358) arranged in the region of the seatback (356) to allow a passenger to buckle up when he or she is seated on the mattress (354) and leaning against the seatback (356), the rigid casing (352) comprising a confidentiality wall (368) which extends across the opening of the large open vertical wall and in the lower corner of the opening on the seatback (356) side, **characterized in that** the confidentiality wall (368) is transparent.

2. Aircraft (100) according to Claim 1, **characterized in that** the anchoring points of the belt (358) are anchored on the horizontal base below the mattress (354) .

3. Aircraft (100) according to Claim 1, **characterized in that** the anchoring points of the belt (358) are anchored on the small vertical wall where the seatback (356) is arranged.

4. Aircraft (100) according to one of Claims 1 to 3, **characterized in that** the rigid casing (352) has a retractable table (357).

5. Aircraft (100) according to one of Claims 1 to 4, **characterized in that** it comprises two modules (250, 350) placed back to back one against the other via a common vertical back wall (360) which is opposite and parallel to the large open wall, and **in that** the vertical back wall (360) is traversed by an aperture (373) and comprises a shutter (372) which can move between an open position in which it does not shut off the aperture (373) and a closed position in which it shuts off the aperture (373).

6. Aircraft (100) according to one of Claims 1 to 5, **characterized in that** the cabin (102) has a wall (212) equipped with portholes (214), **in that** the module (250, 350) has its vertical back wall (360), which is opposite and parallel to the large open wall, against the wall (212) of the cabin (102) equipped with portholes, and **in that** the vertical back wall (360) is transparent.

7. Aircraft (100) according to Claim 6, **characterized in that** the vertical back wall (360) is equipped with a masking system.

8. Aircraft (100) according to one of Claims 1 to 7, **characterized in that** the rigid casing (352) comprises a curtain (370) which can move between a retracted position in which it shuts off neither the opening nor the confidentiality wall (368), and an extended position in which it shuts off the opening and the confidentiality wall (368).

9. Aircraft (100) according to one of Claims 1 to 8, **characterized in that** it comprises a lower module (350) and an upper module (350) stacked on the lower module (350), and **in that** the rigid casing (352) of the lower module (350) has a recess (376) in which a ladder (378) is formed.
